(19) Europäisches Patentamt
European Patent Office
Office européen des brevets

(11) EP 4 387 041 A1

(12) EUROPEAN PATENT APPLICATION

(43) Date of publication:
19.06.2024 Bulletin 2024/25

(51) International Patent Classification (IPC):
*H02J 7/00* (2006.01)

(21) Application number: 23156682.9

(22) Date of filing: 15.02.2023

(52) Cooperative Patent Classification (CPC):
H02J 7/0071; H02J 7/005; H02J 7/0069;
H02J 7/00712; H02J 7/007188

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 12.12.2022 CN 202211587660

(71) Applicant: CALB Co., Ltd.
Changzhou City, Jiangsu Province (CN)
(72) Inventors:
• ZHU, Suran
Changzhou City, Jiangsu Province (CN)
• ZHANG, Yule
Changzhou City, Jiangsu Province (CN)
• CHEN, Guoqiang
Changzhou City, Jiangsu Province (CN)

(74) Representative: Becker, Eberhard
Becker Kurig & Partner
Patentanwälte mbB
Bavariastraße 7
80336 München (DE)

(54) **USER-SIDE BATTERY ENERGY STORAGE SYSTEM AND CONTROL METHOD THEREOF**

(57) A user-side battery energy storage system and a control method thereof are provided. Through setting a corresponding optimal voltage range in each operation adjustment cycle, each operation adjustment cycle corresponds to a matching optimal voltage range, so as to implement self-adaptive adjustment of a voltage range. Moreover, when charging/discharging based on the optimal voltage range, the electrochemical conversion efficiency of a battery can be the highest, and the energy utilization rate can be the highest, so that the performance of the battery can reach an optimal state, thereby maximizing a user benefit.

Obtain an SOH of a user-side battery energy storage system — S101

Determine a first correspondence between a voltage range and a discharge depth under the obtained SOH, a second correspondence between the discharge depth and a discharge energy utilization rate, a third correspondence between the discharge depth and a charge/discharge energy efficiency, and a discharge energy corresponding to the obtained SOH according to a pre-established correspondence database of the SOH, the voltage range, the discharge energy, the discharge depth, the discharge energy utilization rate, and the charge/discharge energy efficiency — S102

Determine the corresponding discharge depth when a user benefit is maximum according to a user benefit function, the second correspondence and the third correspondence under the obtained SOH, and the discharge energy corresponding to the obtained SOH when the user benefit function is established according to a relation between the discharge energy, the discharge depth, the charge/discharge energy efficiency, and the discharge energy utilization rate — S103

Determine the voltage range corresponding to the discharge depth when the user benefit is maximum according to the first correspondence under the obtained SOH, use the voltage range as an optimal voltage range, and charge/discharge the user-side battery energy storage system based on the optimal voltage range — S104

FIG. 1

EP 4 387 041 A1

**Description**

BACKGROUND

Technical Field

The disclosure relates to the field of energy storage technology, and in particular to a user-side battery energy storage system and a control method thereof.

Description of Related Art

With the rapid growth of electric vehicle users and the policy guidance of the peak-to-valley electricity price difference, the demand for user-side battery energy storage systems is also constantly being emancipated. In practical applications, the user-side battery energy storage system may be charged at night when the electricity price is lower and discharged during the day when the electricity price is higher to provide the user with electrical energy, so as to replace the use of electrical energy by the user in the grid. As such, if the cost incurred when the user uses the grid during the day is recorded as cost 1, and the cost incurred by the user charging the user-side battery energy storage system at night is recorded as cost 2, the difference between cost 1 and cost 2 is the user benefit. How to maximize the user benefit is a technical issue to be urgently solved by persons skilled in the art.

SUMMARY

Embodiments of the disclosure provide a user-side battery energy storage system and a control method thereof, which are used to maximize the user benefit when using the user-side battery energy storage system.

According to a first aspect, an embodiment of the disclosure provides a user-side battery energy storage system, including a battery and a controller.

The controller is configured to control the battery to charge/discharge with a corresponding optimal voltage range within each preset operation adjustment cycle.

The optimal voltage ranges corresponding to at least part of the operation adjustment cycles are different, and the optimal voltage range corresponding to any of the operation adjustment cycles is determined by adopting the following method.

A user benefit function is established according to a relation between a discharge energy, a discharge depth, a charge/discharge energy efficiency, and a discharge energy utilization rate, and at an initial moment of a current operation adjustment cycle, the corresponding discharge depth when a user benefit is maximum is determined according to the user benefit function and the discharge energy, the discharge depth, the charge/discharge energy efficiency, and the discharge energy utilization rate corresponding to an SOH at the initial moment of the current operation adjustment cycle, a voltage range corresponding to the discharge depth when the user benefit is maximum is determined according to a first correspondence between the discharge depth and the voltage range, and the voltage range is used as the optimal voltage range of the current operation adjustment cycle.

According to a second aspect, an embodiment of the disclosure provides a control method of a user-side battery energy storage system, including the following steps.

An SOH of the user-side battery energy storage system is obtained.

A first correspondence between a voltage range and a discharge depth under the obtained SOH, a second correspondence between the discharge depth and a discharge energy utilization rate, a third correspondence between the discharge depth and a charge/discharge energy efficiency, and a discharge energy corresponding to the obtained SOH are determined according to a pre-established correspondence database of the SOH, the voltage range, the discharge energy, the discharge depth, the discharge energy utilization rate, and the charge/discharge energy efficiency.

The corresponding discharge depth when a user benefit is maximum is determined according to a user benefit function, the second correspondence and the third correspondence under the obtained SOH, and the discharge energy corresponding to the obtained SOH when the user benefit function is established according to a relation between the discharge energy, the discharge depth, the charge/discharge energy efficiency, and the discharge energy utilization rate.

A voltage range corresponding to the discharge depth when the user benefit is maximum is determined according to the first correspondence under the obtained SOH, the voltage range is used as an optimal voltage range, and the user-side battery energy storage system is charged/discharged based on the optimal voltage range.

The beneficial effects of the disclosure are as follows.

In the user-side battery energy storage system and the control method thereof provided by the embodiments of the disclosure, through setting the corresponding optimal voltage range in each operation adjustment cycle, each operation adjustment cycle corresponds to a matching optimal voltage range, so as to implement self-adaptive adjustment of the voltage range. Moreover, when charging/discharging based on the optimal voltage range, the electrochemical conversion efficiency of a battery can be the highest, and the energy utilization rate can be the highest, so that the performance of the battery can reach an optimal state, thereby maximizing the user benefit.

BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.

FIG. 1 is a flowchart of a control method according to an embodiment of the disclosure.
FIG. 2 is a schematic diagram of a structure of a user-side battery energy storage system according to an embodiment of the disclosure.

DETAILED DESCRIPTION OF DISCLOSED EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

The specific implementation manners of a user-side battery energy storage system and a control method thereof provided by the embodiments of the disclosure will be described in detail below with reference to the drawings. It should be noted that the described embodiments are only a part of the embodiments of the disclosure, but not all of the embodiments. Based on the embodiments of the disclosure, all other embodiments obtained by persons of ordinary skill in the art without making creative efforts belong to the protection scope of the disclosure.

With the rapid growth of electric vehicle users and the policy guidance of the peak-to-valley electricity price difference, the demand for user-side battery energy storage systems is also constantly being emancipated. However, research on how to maximize the benefit of the user-side battery energy storage system is still in its infancy. At present, the operation manner of the user-side battery energy storage system is as follows. A battery manufacturer presets a voltage range, and a user executes a charge/discharge operation within the voltage range, so that the user-side battery energy storage system always adopts the same voltage range when charging/discharging. However, with the increase in the service life of the user-side battery energy storage system, the charge/discharge energy efficiency of the user-side battery energy storage system decreases, resulting in a decrease in the user benefit for each charge/discharge, which eventually causes the overall benefit of the user-side battery energy storage system to be reduced.

Based on this, the embodiments of the disclosure provide a user-side battery energy storage system and a control method thereof, which are used to maximize the user benefit when using the user-side battery energy storage system.

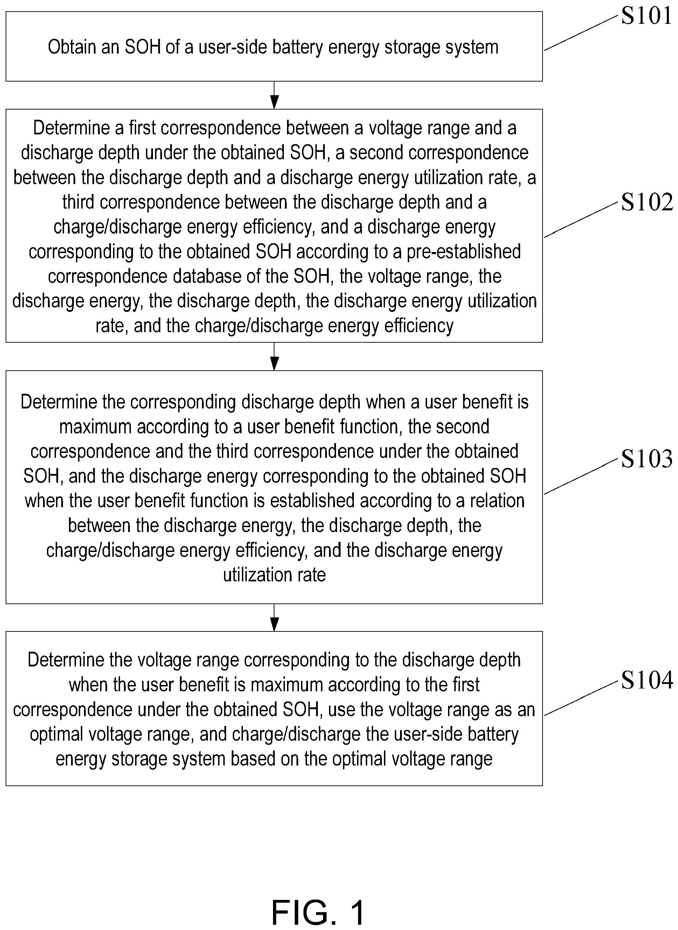

Specifically, an embodiment of the disclosure provides a control method of a user-side battery energy storage system, as shown in FIG. 1, which may include the following.

In S101, an SOH of the user-side battery energy storage system is obtained.

In S102, according to a pre-established correspondence database of the SOH, a voltage range, a discharge energy, a discharge depth, a discharge energy utilization rate, and a charge/discharge energy efficiency, a first correspondence between the voltage range and the discharge depth under the obtained SOH, a second correspondence between the discharge depth and the discharge energy utilization rate, a third correspondence between the discharge depth and the charge/discharge energy efficiency, and the discharge energy corresponding to the obtained SOH are determined.

In some embodiments, the discharge energy in the correspondence database is the discharge energy of a maximum voltage range within a full life cycle of a battery.

Moreover, the correspondence database may be pre-implanted when the user-side battery energy storage system leaves the factory, so that the user may read data in the correspondence database when the optimal voltage range needs to be updated during use, thereby obtaining the relevant data.

In some embodiments, regarding the first correspondence between the voltage range and the discharge depth, the selection of the voltage range may be determined according to actual requirements, for example, but not limited to, dividing a voltage range at every interval of 100 mv or 200 mv, which is not limited here.

In some embodiments, when setting up the correspondence database, the correspondence database may be set according to a combination of the electrical energy simulation and the actual measurement result of the battery, so as to improve the accuracy of the correspondence database.

In some embodiments, the correspondence database includes multiple SOHs. Each SOH corresponds to a data group. Each data group includes a correspondence between the voltage range and the discharge depth, a correspondence between the discharge depth and the discharge energy utilization rate, a correspondence between the discharge depth and the charge/discharge energy efficiency, and the discharge energy.

Therefore, based on the obtained SOH, the corresponding data group may be obtained from the correspondence database, thereby determining the first correspondence between the voltage range and the discharge depth under the obtained SOH, the second correspondence between the discharge depth and the discharge energy utilization rate, the third correspondence between the discharge depth and the charge/discharge energy efficiency, and the discharge energy corresponding to the obtained SOH.

In S103, when a user benefit function is established according to a relation between the discharge energy, the discharge depth, the charge/discharge energy efficiency, and the discharge energy utilization rate, the corresponding discharge depth when the user benefit is maximum is determined according to the user benefit function, the second correspondence and the third correspondence under the obtained SOH, and the discharge energy corresponding to the obtained SOH.

In S 104, the voltage range corresponding to the discharge depth when the user benefit is maximum is determined according to the first correspondence under the obtained SOH, and the voltage range is used as the optimal voltage range, and the user-side battery energy storage system based on the optimal voltage range is charged/discharged based on the optimal voltage range.

It should be understood that the voltage range mentioned in the embodiments of the disclosure includes a charging voltage range and a discharging voltage range.

In this way, the determined optimal voltage range is matched the SOH of the user-side battery energy storage system. When charging/discharging based on the optimal voltage range, the electrochemical conversion efficiency of the battery can be the highest, and the energy utilization rate can be the highest, so that the performance of the battery reach an optimal state, thereby maximizing the user benefit.

In some embodiments, when determining the optimal voltage range, the optimal voltage range may be determined according to user requirements (that is, the optimal voltage range is updated according to requirements) or may also be regularly determined (that is, the optimal voltage range is regularly updated).

If a usage frequency of the user-side battery energy storage system is lower, and the use is more casual and not too regular, the optimal voltage range may be updated according to user requirements, so as to reduce the number of updates to reduce the power consumption of the user-side battery energy storage system.

If the usage frequency of the user-side battery energy storage system is higher, and the use is more regular, the optimal voltage range may be regularly updated, so as to ensure that the user benefit can be maximized when the user is using.

Of course, application scenarios of updating the optimal voltage range according to requirements and regularly updating the optimal voltage range are not limited to the two listed above. There may also be other scenarios, which may be determined according to actual requirements, as long as the user benefit can be maximized.

In some embodiments, when updating the optimal voltage range according to user requirements, a corresponding control button may be disposed in the user-side battery energy storage system or a corresponding operation interface may be disposed in a display when there is the display. When the user intends to update, the update is activated through the control button or the operation interface, thereby obtaining the latest optimal voltage range, and charge/discharge is then performed based on the latest optimal voltage range, so as to maximize the user benefit.

In some embodiments, for regularly updating the optimal voltage range, an operation adjustment cycle may be preset, and the optimal voltage range may be updated every time the operation adjustment cycle is reached, so as to ensure that the optimal voltage range within each operation adjustment cycle is matched, which is conducive to always maximizing the user benefit.

The size of the operation adjustment cycle may be set according to the usage frequency of the user, the discharge energy, the application scenario, the power requirements of the user-side battery energy storage system, and other factors, which is not limited here.

Based on this, in some embodiments, charging/discharging the user-side battery energy storage system based on the optimal voltage range includes the following.

Manner 1:

When the obtained SOH is the SOH at an initial moment of a preset i-th operation adjustment cycle, and i is a positive integer, the user-side battery energy storage system is charged/discharged within the i-th operation adjustment cycle based on an optimal voltage range corresponding to the SOH at the initial moment of the i-th operation adjustment cycle.

In other words, taking a first operation adjustment cycle as an example, at an initial moment of the first operation adjustment cycle, an SOH may be obtained, and through the processing of S 102 to S104, an optimal voltage range may be determined. The optimal voltage range is the optimal voltage range corresponding to the first operation adjustment cycle. Then, the user-side battery energy storage system may be charged/discharged within the first operation adjustment cycle by adopting the optimal voltage range.

The initial moment of the first operation adjustment cycle may be understood as the initial moment when the user-side battery energy storage system works.

In this way, each operation adjustment cycle corresponds to a matching optimal voltage range, and the adaptive matching between the operation adjustment cycle and the optimal voltage range is implemented, thereby always maximizing the user benefit.

Manner 2:

In the preset first operation adjustment cycle, the preset voltage range is adopted as the optimal voltage range to charge/discharge the user-side battery energy storage system.

In an (i+1)-th operation adjustment cycle, when the obtained SOH is the SOH at an initial moment of the (i+1)-th operation adjustment cycle, and i is a positive integer, the user-side battery energy storage system is charged/discharged within the (i+1)-th operation adjustment cycle based on an optimal voltage range corresponding to the SOH at the initial moment of the (i+1)-th operation adjustment cycle.

In other words, the preset voltage range may be used as the optimal voltage range of the first operation adjustment cycle, and the corresponding optimal voltage range is determined by adopting the processing of S 102 to S 104 starting from a second operation adjustment cycle.

Since when the user-side battery energy storage system is running within the first operation adjustment cycle, the user-side battery energy storage system is in the initial stage of use, and all performances are in the optimal state, the SOH may be regarded as 100%. Therefore, the preset voltage range is more in line with the state of the user-side battery energy storage system at this time, so the preset voltage range may be regarded as the current optimal voltage range at this time, without additionally calculating an optimal voltage range, so as to reduce the amount of computation, reduce the number of processing, and reduce power consumption.

In short, in actual situations, the optimal voltage range may be determined by selecting Manner 1 or Manner 2 above according to the actual situation, so as to meet the requirements of different application scenarios to improve the flexibility of the design.

In some embodiments, the user-side battery energy storage system may include a battery and a controller. The controller may be implemented by adopting a battery management device or an energy management device. The controller may collect information such as the voltage and the temperature of the battery, and calculate information such as the SOC and the SOH of the battery to be stored in a storage space, so as to monitor the state of the battery. Based on this, the manner of obtaining the SOH in Step S101 above may include, but not limited to, that the controller may read the SOH from the storage space.

In some embodiments, the implementation process of Step S102 above may include the following.

Manner 1:

From the pre-established correspondence database, the first correspondence between the voltage range and the discharge depth under the obtained SOH, the second correspondence between the discharge depth and the discharge energy utilization rate, the third correspondence between the discharge depth and the charge/discharge energy efficiency, and the discharge energy corresponding to the obtained SOH are directly found.

In this way, the first correspondence, the second correspondence, the third correspondence, and the discharge energy may be quickly found from the correspondence database, so as to improve the update efficiency of the optimal voltage range.

Manner 2:

By adopting a cubic spline interpolation method, from the pre-established correspondence database, the first correspondence between the voltage range and the discharge depth under the obtained SOH, the second correspondence between the discharge depth and the discharge energy utilization rate, the third correspondence between the discharge depth and the charge/discharge energy efficiency, and the discharge energy corresponding to the obtained SOH are determined.

In this way, the determined first correspondence, second correspondence, third correspondence, and discharge energy can be more accurate, and errors can be reduced, which is conducive to improving the accuracy of the finally determined optimal voltage range.

In short, in actual situations, Step S 102 above may be implemented by selecting Manner 1 or Manner 2 above according to the actual situation, so as to meet the requirements of different application scenarios to improve the flexibility of the design.

In some embodiments, the implementation process of Step S 103 above may include the following.

Polynomial fitting processing is performed on the second correspondence under the obtained SOH to obtain a corresponding second fitting relational expression, and polynomial fitting processing is performed on the third correspondence under the obtained SOH to obtain a corresponding third fitting relational expression.

According to the user benefit function, the second fitting relational expression, the third fitting relational expression, and the discharge energy corresponding to the obtained SOH, the corresponding discharge depth when the user benefit is maximum is determined.

For example, the obtained SOH being 100% is taken as an example, and it is assumed that data under the 100% SOH determined from the correspondence database includes the following.

The first correspondence between the voltage range and the discharge depth (abbreviated as DOD) is 2.5V to 3.55V (corresponding to 100% DOD), 2.7V to 3.55V (corresponding to 99% DOD), 2.8V to 3.55V (corresponding to 98.3% DOD), and 3.0V to 3.55V (corresponding to 95.5% DOD).

The second correspondence between the discharge depth and the discharge energy utilization rate (abbreviated as UTE) is 100% DOD (corresponding to 100% UTE), 99% DOD (corresponding to 98.4% UTE), 98.3% DOD (corresponding to 97.5% UTE), and 95.5% DOD (corresponding to 94.3% UTE), wherein the higher the discharge depth, the higher the discharge energy utilization rate, and the lower the discharge depth, the lower the discharge energy utilization rate. Therefore, the discharge depth is positively correlated with the discharge energy utilization rate.

The third correspondence between the discharge depth and the charge/discharge energy efficiency (abbreviated as Effi) is 100% DOD (corresponding to 93% Effi), 99% DOD (corresponding to 93.8% Effi), 98.3% DOD (corresponding to 94.5% Effi), 95.5% DOD (corresponding to 95.5% Effi), wherein the higher the discharge depth, the lower the charge/discharge energy efficiency, and the lower the discharge depth, the higher the charge/discharge energy efficiency. Therefore, the discharge depth is negatively correlated with the charge/discharge energy efficiency.

The discharge energy is 100 MWh.

Then, after performing polynomial fitting processing on the second correspondence, the obtained second fitting relational expression may be $y2=7.8404x^2-14.065x+7.2247$, and after performing polynomial fitting processing on the third correspondence, the obtained third fitting relational expression may be $y3=-11.259x^2+21.47x-9.2811$, where x represents the discharge depth.

Afterwards, based on the user benefit function and the two fitting relational expressions, the corresponding discharge depth when the user benefit is maximum is determined.

In this way, on the basis of considering the discharge energy utilization rate and the charge/discharge energy efficiency, the discharge depth when the user benefit is maximized may be calculated, so that the optimal voltage range may be determined based on the discharge depth.

In some embodiments, the user benefit function is the following relational expression (denoted as Equation 1):

$$Y=Q*y2*[M1-(1/y3)*M2]$$

where Y represents the user benefit, Q represents the discharge energy corresponding to the SOH, y2 represents the correspondence between the discharge depth and the discharge energy utilization rate, y3 represents the correspondence between the discharge depth and the discharge energy efficiency, M1 represents the electricity price peak value, and M2 represents the electricity price valley value.

Based on this, according to the user benefit function, the second fitting relational expression, the third fitting relational expression, and the discharge energy corresponding to the obtained SOH, the corresponding discharge depth when the user benefit is maximum is determined, which includes the following.

By adopting Equation 1 above, the corresponding discharge depth when the user benefit is maximum is determined.

In addition, in Equation 1 above, y2 is the second fitting relational expression, y3 is the third fitting relational expression, and Q is the discharge energy corresponding to the obtained SOH.

For example, continuing to combine the above example, when the second fitting relational expression and the third fitting relational expression are brought into the user benefit function, the following relational expression may be obtained:

$$Y=100000*(7.8404x^2-14.065x+7.2247)*[M1-1/(-11.259x^2+21.47x-9.2811)*M2]$$

When the electricity price peak value represented by M1 and the electricity price valley value represented by M2 are determined, the above relational expression is a quadratic equation with one unknown. Through solving the equation, the value of x when Y takes the maximum value may be obtained, and the value of x is used as the discharge depth when the user benefit is maximized.

Since the first correspondence between the voltage range and the discharge depth corresponding to the obtained SOH is determined, the voltage range corresponding to the discharge depth when the user benefit is maximized may be found from the first correspondence, so that the voltage range may be used as the optimal voltage range.

In the following, the user benefit obtained by adopting the above control method will be analyzed in combination with specific embodiments.

Taking the data of the user-side battery energy storage system with the discharge energy of 100 MWh under the 100% SOH as an example, and assuming that the electricity price peak value is 1 yuan/kWh and the electricity price valley value is 0.7 yuan/kWh, the user benefits corresponding to different discharge depths are calculated. The specific results are shown in Table 1, where DOD represents the discharge depth and Y1 represents a single charge/discharge benefit.

From Table 1 below, the following conclusions may be drawn.

1. When the above control method provided by the embodiment of the disclosure is not adopted, but the voltage range corresponding to 100% DOD is directly used for charging/discharging, the single charge/discharge benefit Y1 is 24725.6 yuan. When the above control method provided by the embodiment of the disclosure is adopted to determine that the DOD when the user benefit is maximized is 97%, and when charging/discharging is performed based on the voltage range corresponding to the DOD, the single charge/discharge benefit Y1 is 25318.1 yuan, so the single charge/discharge benefit Y1 is increased by 592.5 yuan.

Table 1

| DOD/% | Y1/yuan |
|-------|---------|
| 100 | 24725.6 |
| 99 | 25083.7 |
| 98 | 25275.1 |
| **97** | **25318.1** |
| 96 | 25226.4 |
| 95 | 25009.3 |
| 94 | 24671.9 |
| 93 | 24215.6 |
| 92 | 23637.8 |

2. For the user-side battery energy storage system that has a working life of 10 years and is charged/discharged once a day, assuming that during the 10 years, the SOH of the user-side battery energy storage system is always 100%, the benefit that may be increased within the full life cycle is 592.5*365*10≈2 million yuan. However, in actual situations, during the 10 years, the SOH of the user-side battery energy storage system is not always maintained at 100%, and the SOH decreases with the prolongation of the usage time. If the above control method provided by the embodiment of the disclosure is adopted to update the corresponding DOD at any time as the SOH changes, the increased benefit within the full life cycle will inevitably be greater than 2 million yuan, which further increases the user benefit.

Therefore, when the determined voltage range corresponding to the discharge depth when the user benefit is maximized is the optimal voltage range, and the battery is charged/discharged based on the optimal voltage range, the user benefit may be effectively improved and maximized.

Based on the same inventive concept, an embodiment of the disclosure provides a user-side battery energy storage system. The implementation principle of the system is similar to the implementation principle of the above control method. For the specific implementation of the system, please refer to the specific embodiment of the above control method, which will not be repeated.

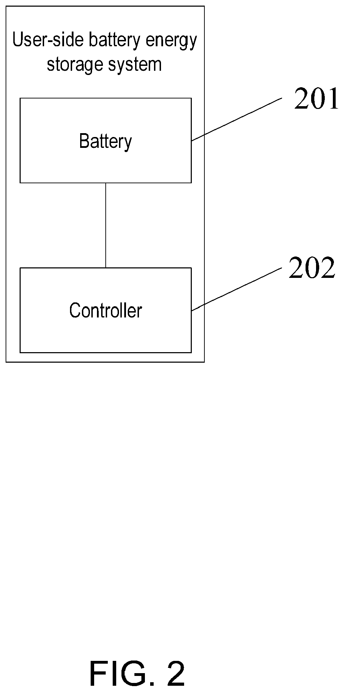

Specifically, a user-side battery energy storage system provided by an embodiment of the disclosure, as shown in FIG. 2, may include a battery 201 and a controller 202.

The controller 202 is configured to control a battery 201 to charge/discharge with a corresponding optimal voltage range within each preset operation adjustment cycle.

The optimal voltage ranges corresponding to at least part of the operation adjustment cycles are different, and the optimal voltage range corresponding to any of the operation adjustment cycles is determined by adopting the following method.

A user benefit function is established according to a relation between a discharge energy, a discharge depth, a charge/discharge energy efficiency, and a discharge energy utilization rate, and at an initial moment of a current operation adjustment cycle, the corresponding discharge depth when a user benefit is maximum is determined according to the user benefit function and the discharge energy, the discharge depth, the charge/discharge energy efficiency, and the discharge energy utilization rate corresponding to an SOH at the initial moment of the current operation adjustment cycle, a voltage range corresponding to the discharge depth when the user benefit is maximum is determined according to a first correspondence between the discharge depth and the voltage range, and the voltage range is used as the optimal voltage range of the current operation adjustment cycle.

In this way, through setting the corresponding optimal voltage range in each operation adjustment cycle, each operation adjustment cycle corresponds to a matching optimal voltage range, so as to implement self-adaptive adjustment of the voltage range. Moreover, when charging/discharging based on the optimal voltage range, the electrochemical conversion efficiency of a battery can be the highest, and the energy utilization rate can be the highest, so that the performance of the battery can reach an optimal state, thereby maximizing the user benefit.

In some embodiments, if the SOHs at the initial moments of two operation adjustment cycles are the same, and the electricity price peak values and the electricity price valley values are also the same, the optimal voltage ranges of the two operation adjustment cycles are also the same. If the SOHs at the initial moments of two operation adjustment cycles are different, and/or the electricity prices (including the electricity price peak values and the electricity price valley values) are different, the optimal voltage ranges of the two operation adjustment cycles are different.

In some embodiments, the controller is configured to perform the following.

At an initial moment of an i-th operation adjustment cycle, where i is a positive integer, the following process is executed.

A current SOH of the user-side battery energy storage system is obtained.

A first correspondence between the voltage range and the discharge depth under the current SOH, a second correspondence between the discharge depth and the discharge energy utilization rate, a third correspondence between the discharge depth and the charge/discharge energy efficiency, and the discharge energy corresponding to the current SOH are determined according to a pre-established correspondence database of the SOH, the voltage range, the discharge energy, the discharge depth, the discharge energy utilization rate, and the charge/discharge energy efficiency.

The corresponding discharge depth when the user benefit is maximum is determined according to the user benefit function, the second correspondence and the third correspondence under the current SOH, and the discharge energy corresponding to the current SOH.

A voltage range corresponding to the discharge depth when the user benefit is maximum is determined according to the first correspondence under the current SOH, and the voltage range is used as the optimal voltage range corresponding to the i-th operation adjustment cycle.

In some embodiments, the controller is configured to perform the following.

Polynomial fitting processing is performed on the second correspondence under the current SOH to obtain a corresponding second fitting relational expression, and polynomial fitting processing is performed on the third correspondence under the current SOH to obtain a corresponding third fitting relational expression

The corresponding discharge depth when the user benefit is maximum is determined according to the user benefit function, the second fitting relational expression, the third fitting relational expression, and the discharge energy corresponding to the current SOH.

In some embodiments, the user benefit function is the following relational expression:

$$Y = Q * y2 * [M1 - (1/y3) * M2]$$

where Y represents the user benefit, Q represents the discharge energy corresponding to the SOH, y2 represents the correspondence between the discharge depth and the discharge energy utilization rate, y3 represents the correspondence between the discharge depth and the discharge energy efficiency, M1 represents the electricity price peak value, and M2 represents the electricity price valley value.

In some embodiments, when the optimal voltage range is determined, the determined optimal voltage range may be stored in a storage space, so as to charge/discharge the battery according to the optimal voltage range during the entire operation adjustment cycle.

In some embodiments, the controller may be implemented by adopting a battery management device or an energy management device.

In some embodiments, in addition to the battery and the controller, the user-side battery energy storage system may also include other structures for implementing system functions, such as, but not limited to, a display, which is not limited here.

It should be emphasized that by adopting the above solutions provided by the embodiments of the disclosure, the user benefit function may be established based on the characteristics that the smaller the discharge depth, the lower the discharge energy utilization rate, but the higher the charge/discharge energy efficiency. With the help of the battery management device or the energy management device, the optimal voltage range when the user benefit is maximized at each SOH stage within the full life cycle is dynamically calculated, and the optimal voltage range of the battery is adjusted in real time to maximize the benefit for each charge/discharge of the user-side battery energy storage system, thereby maximizing the user benefit within the full life cycle of the user-side battery energy storage system.

Obviously, persons skilled in the art may make various changes and variations to the disclosure without departing from the spirit and scope of the disclosure. Thus, if the modifications and variations of the disclosure fall within the scope of the claims of the disclosure and equivalent technologies, the disclosure also intends to include the changes and variations.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative, and the real scope and spirit of the present disclosure is defined by the appended claims.

**Claims**

1. A user-side battery energy storage system, comprising:

   a battery (201);
   a controller (202), configured to:
   control the battery to charge/discharge with a corresponding optimal voltage range within each preset operation adjustment cycle,
   wherein the optimal voltage ranges corresponding to at least part of the operation adjustment cycles are different, and the optimal voltage range corresponding to any of the operation adjustment cycles is determined by:
   establishing a user benefit function according to a relation between a discharge energy, a discharge depth, a charge/discharge energy efficiency, and a discharge energy utilization rate, and at an initial moment of a current operation adjustment cycle, determining the corresponding discharge depth when a user benefit is maximum according to the user benefit function and the discharge energy, the discharge depth, the charge/discharge energy efficiency, and the discharge energy utilization rate corresponding to an SOH at the initial moment of the current operation adjustment cycle, determining a voltage range corresponding to the discharge depth when the user benefit is maximum according to a first correspondence between the discharge depth and the voltage range, and using the voltage range as the optimal voltage range of the current operation adjustment cycle.

2. The user-side battery energy storage system according to claim 1, wherein the controller is configured to:
   at an initial moment of an i-th operation adjustment cycle, where i is a positive integer, execute a following process of:

   obtaining a current SOH of the user-side battery energy storage system;
   determining a first correspondence between the voltage range and the discharge depth under the current SOH, a second correspondence between the discharge depth and the discharge energy utilization rate, a third correspondence between the discharge depth and the charge/discharge energy efficiency, and the discharge energy corresponding to the current SOH according to a pre-established correspondence database of the SOH, the voltage range, the discharge energy, the discharge depth, the discharge energy utilization rate, and the charge/discharge energy efficiency;
   determining the corresponding discharge depth when the user benefit is maximum according to the user benefit function, the second correspondence and the third correspondence under the current SOH, and the discharge energy corresponding to the current SOH;

determining a voltage range corresponding to the discharge depth when the user benefit is maximum according to the first correspondence under the current SOH, and using the voltage range as the optimal voltage range corresponding to the i-th operation adjustment cycle.

3. The user-side battery energy storage system according to claim 2, wherein the controller is configured to:

perform polynomial fitting processing on the second correspondence under the current SOH to obtain a corresponding second fitting relational expression, and perform polynomial fitting processing on the third correspondence under the current SOH to obtain a corresponding third fitting relational expression;

determine the corresponding discharge depth when the user benefit is maximum according to the user benefit function, the second fitting relational expression, the third fitting relational expression, and the discharge energy corresponding to the current SOH.

4. The user-side battery energy storage system according to claim 1, wherein the user benefit function is a following relational expression:

$$Y=Q*y2*[M1-(1/y3)*M2]$$

where Y represents the user benefit, Q represents the discharge energy corresponding to an SOH, y2 represents a correspondence between the discharge depth and the discharge energy utilization rate, y3 represents a correspondence between the discharge depth and the discharge energy efficiency, M1 represents an electricity price peak value, and M2 represents an electricity price valley value.

5. A control method of a user-side battery energy storage system, comprising:

obtaining an SOH of the user-side battery energy storage system (S101);

determining a first correspondence between a voltage range and a discharge depth under the obtained SOH, a second correspondence between the discharge depth and a discharge energy utilization rate, a third correspondence between the discharge depth and a charge/discharge energy efficiency, and a discharge energy corresponding to the obtained SOH according to a pre-established correspondence database of the SOH, the voltage range, the discharge energy, the discharge depth, the discharge energy utilization rate, and the charge/discharge energy efficiency (S 102);

determining the corresponding discharge depth when a user benefit is maximum according to a user benefit function, the second correspondence and the third correspondence under the obtained SOH, and the discharge energy corresponding to the obtained SOH when the user benefit function is established according to a relation between the discharge energy, the discharge depth, the charge/discharge energy efficiency, and the discharge energy utilization rate (S103);

determining a voltage range corresponding to the discharge depth when the user benefit is maximum according to the first correspondence under the obtained SOH, using the voltage range as an optimal voltage range, and charging/discharging the user-side battery energy storage system based on the optimal voltage range (S104).

6. The control method according to claim 5, wherein determining the corresponding discharge depth when the user benefit is maximum according to the user benefit function, the second correspondence and the third correspondence under the obtained SOH, and the discharge energy corresponding to the obtained SOH comprises:

performing polynomial fitting processing on the second correspondence under the obtained SOH to obtain a corresponding second fitting relational expression, and performing polynomial fitting processing on the third correspondence under the obtained SOH to obtain a corresponding third fitting relational expression;

determining the corresponding discharge depth when the user benefit is maximum according to the user benefit function, the second fitting relational expression, the third fitting relational expression, and the discharge energy corresponding to the obtained SOH.

7. The control method according to claim 5, wherein the discharge energy in the correspondence database is a discharge energy of a maximum voltage range of a battery within a full life cycle.

8. The control method according to claim 5, wherein the user benefit function is a following relational expression:

$$Y=Q*y2*[M1-(1/y3)*M2]$$

where Y represents the user benefit, Q represents the discharge energy corresponding to an SOH, y2 represents a correspondence between the discharge depth and the discharge energy utilization rate, y3 represents a correspondence between the discharge depth and the discharge energy efficiency, M1 represents an electricity price peak value, and M2 represents an electricity price valley value.

9.  The control method according to claim 5, wherein charging/discharging the user-side battery energy storage system based on the optimal voltage range comprises:
    charging/discharging the user-side battery energy storage system within an i-th operation adjustment cycle based on the optimal voltage range corresponding to an SOH at an initial moment of the i-th operation adjustment cycle when the obtained SOH is the SOH at the initial moment of the preset i-th operation adjustment cycle, where i is a positive integer.

10. The control method according to claim 5, wherein charging/discharging the user-side battery energy storage system based on the optimal voltage range comprises:

    adopting a preset voltage range as the optimal voltage range to charge/discharge the user-side battery energy storage system in a preset first operation adjustment cycle;
    charging/discharging the user-side battery energy storage system within an (i+1)-th operation adjustment cycle based on the optimal voltage range corresponding to an SOH at an initial moment of the (i+1)-th operation adjustment cycle in the (i+1)-th operation adjustment cycle when the obtained SOH is the SOH at the initial moment of the (i+1)-th operation adjustment cycle, where i is a positive integer.

Obtain an SOH of a user-side battery energy storage system

S101

Determine a first correspondence between a voltage range and a discharge depth under the obtained SOH, a second correspondence between the discharge depth and a discharge energy utilization rate, a third correspondence between the discharge depth and a charge/discharge energy efficiency, and a discharge energy corresponding to the obtained SOH according to a pre-established correspondence database of the SOH, the voltage range, the discharge energy, the discharge depth, the discharge energy utilization rate, and the charge/discharge energy efficiency

S102

Determine the corresponding discharge depth when a user benefit is maximum according to a user benefit function, the second correspondence and the third correspondence under the obtained SOH, and the discharge energy corresponding to the obtained SOH when the user benefit function is established according to a relation between the discharge energy, the discharge depth, the charge/discharge energy efficiency, and the discharge energy utilization rate

S103

Determine the voltage range corresponding to the discharge depth when the user benefit is maximum according to the first correspondence under the obtained SOH, use the voltage range as an optimal voltage range, and charge/discharge the user-side battery energy storage system based on the optimal voltage range

S104

# FIG. 1

User-side battery energy storage system

Battery — 201

Controller — 202

FIG. 2

## EUROPEAN SEARCH REPORT

**Application Number**

EP 23 15 6682

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 742 303 A (XUCHANG XJ SOFTWARE TECHNOLOGY) 12 July 2022 (2022-07-12) | 1,4 | INV.<br>H02J7/00 |
| A | * claims 1-6 * | 2,3,5-10 | |

-----

**TECHNICAL FIELDS SEARCHED (IPC)**

H02J

The present search report has been drawn up for all claims

| Place of search | Date of completion of the search | Examiner |
|---|---|---|
| Munich | 13 September 2023 | Telega, Pawel |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

 
& : member of the same patent family, corresponding
　　document

EPO FORM 1503 03.82 (P04C01)

## ANNEX TO THE EUROPEAN SEARCH REPORT
## ON EUROPEAN PATENT APPLICATION NO.

**EP 23 15 6682**

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2023

| Patent document cited in search report | Publication date | Patent family member(s) | Publication date |
|---|---|---|---|
| CN 114742303 A | 12-07-2022 | NONE | |

For more details about this annex : see Official Journal of the European Patent Office, No. 12/82